# EUROPÄISCHE PATENTSCHRIFT

(11) **EP 1 793 473 B1**
(45) Veröffentlichungstag und Bekanntmachung des Hinweises auf die Patenterteilung: **11.12.2013**
(21) Anmeldenummer: 06121976.2
(22) Anmeldetag: 09.10.2006
(51) Int. Cl.: H02K 5/14, H01R 39/38, H02K 11/02, H01R 39/39

(54) **Bürstenträger - Bauteil mit Hammerbürsten**
Brush holder with brush leaves
Porte-balais avec balais en tôle

(30) Priorität: 30.11.2005 DE 102005057395
(43) Veröffentlichungstag der Anmeldung: 06.06.2007
(73) Patentinhaber: ROBERT BOSCH GMBH, 70442 Stuttgart (DE)
(72) Erfinder: Heitz, Robert, 76437 Rastatt (DE); Burkart, Manfred, 76473 Iffezheim (DE); Maerkle, Jens, 77815 Buehl (DE); Kuperberg, Ilya, 76149 Karlsruhe (DE)

(56) Entgegenhaltungen:
- EP-A1- 0 638 968
- DE-A1- 10 010 439
- DE-A1- 10 342 221
- DE-A1- 19 858 233

## Beschreibung

### Stand der Technik

Die Erfindung betrifft einen Bürstenträger-Bauteil sowie ein Elektromotor beinhaltend ein solches, sowie ein Verfahren zum Herstellen eines solchen Elektromotors nach der Gattung der unabhängigen Ansprüche.

Mit der DE 10010 439 A1 ist ein Stellantrieb mit einem Elektromotor bekannt geworden, bei dem die Welle des Elektromotors mit einem darauf angeordnetem Kommutator in einem Getriebegehäuse gelagert ist. Zur elektrischen Kontaktierung des Kommutators weist der Stellantrieb einen Bürstenhalter mit in Köchern angeordneten Kohlebürsten auf, der vor dessen Montage lose mit einer Leiterplatte gekoppelt ist. Danach wird der Bürstenhalter zusammen mit der Leiterplatte in die untere Gehäuseschale eingesetzt und beispielsweise mittels Schrauben am Gehäuse befestigt. Bei der Montage wird sowohl die Leiterplatte als auch der Bürstenhalter mittels Führungselementen gegenüber dem Gehäuse geführt. Aufgrund der losen Kopplung des Bürstenhalters an der Leiterplatte vor dessen Montage sind elektrische Anschlussleitungen der auf dem Bürstenhalter angeordneten Bauelemente entsprechend flexibel ausgeführt. Die Fertigung solcher flexiblen elektrischen Anschlüsse ist - ebenso wie die Kontaktierung der Kohlelitzen - recht umständlich und teuer. Außerdem beanspruchen die Köcher mit den Anpressfedern einen relativ großen Bauraum.

Mit der DE 103 42 221 A1 ist ein Elektromotor mit einem Träger für Kohlebürsten bekannt geworden, bei dem U-förmig gebogene Blattfedern, die die Kohlebürsten tragen, in den Träger eingesetzt werden. Dabei besteht der Träger aus einem umspritzten Stanzgitter oder einer Leiterplatte.

Die EP-A1-0 638 968 zeigt einen Elektromotor mit einem Lagerschild, bei dem Hammerbürsten mit einer daran angeformten Montageplatte axial in das Lagerschild eingesteckt werden können.

In der DE 198 58 233 A1 ist ein elektrischer Getriebemotor offenbart, bei dem ein Bürstenhalter ein U-förmiges Trägerteil aus Kunststoff aufweist, an dem drei Hammerbürsten befestigt sind. Bei der Montage des Getriebemotors wird der U-förmige Bürstenhalter radial über die Rotorwelle geschoben, sodass die Hammerbürsten am Kommutator anliegen.

### Offenbarung der Erfindung

Das erfindungsgemäße Bürstenträger-Bauteil, beziehungsweise der Elektromotor und dessen Herstellungsverfahren mit den kennzeichnenden Merkmalen der unabhängigen Ansprüche haben den Vorteil, dass durch die direkte Anordnung der Hammerbürsten in entsprechenden Bürstenaufnahmen des Bürstenträger-Bauteils der Bauraum und der Justage-Aufwand erheblich reduziert werden können. Durch das Festklemmen der Hammerbürsten in den Aufnahmen des Bürstenträger-Bauteils entfällt ein zusätzlicher Montageprozess für die Befestigung der Hammerbürsten. Außerdem kann der Bürstendruck der Hammerbürsten aufgrund deren Vormontage im Bürstenhalter-Bauteil vorab überprüft werden. Zum Einklemmen der Hammerbürsten weist das Bürstenträger-Bauteil eine Führungsschiene auf, in der die Hammerbürsten bei deren Montage axial gehalten werden und tangential zur Ankerwelle verschiebbar sind. Parallel zur Führungsschiene ist im Bürstenträger-Bauteil als Durchbruch ein Schlitz ausgebildet, durch den am Federsteg angeordnete Kontaktpins hindurch greifen. Dadurch ragen die Kontaktpins durch die Bodenfläche des Bürstenträger-Bauteils hindurch und können somit sehr einfach mit einer parallel zur Bodenfläche angeordneten Leiterplatte kontaktiert werden.

Durch die in den Unteransprüchen aufgeführten Maßnahmen ergeben sich vorteilhafte Weiterbildungen und Verbesserungen der in den unabhängigen Ansprüchen angegebenen Merkmale. Von besonderem Vorteil ist es, wenn am Federhebel der Hammerbürste an dem der Kohle gegenüber liegenden Ende ein Klemmelement angeformt ist, das in die Bürstenaufnahme des Bürstenträger-Bauteils einsteckbar ist. Dadurch ist der Federhebel frei beweglich, wodurch die Kohlen mit definierter Anpresskraft an den Kommutator angedrückt werden können.

Sind am Klemmelement zusätzlich Rastelemente angeformt, werden die Hammerbürsten beim Einschieben gleichzeitig zuverlässig fixiert, da sich die Rastelemente - beispielsweise in Form von Widerhaken - fest in der korrespondierenden Gegenfläche des Bürstenträger-Bauteils verkrallen.

Um die Hammerbürsten auch in tangentialer Richtung in einer definierten Position zu fixieren, ist quer zur Führungsschiene ein Anschlag angeordnet, bis zu dem die Klemmelemente der beiden Hammerbürsten jeweils in entgegen gesetzter Richtung eingeschoben werden. Durch die Positionierung des Anschlags (Abstand zur Ankerwelle) kann die Anpresskraft der Bürsten auf den Kommutator eingestellt werden.

Besonders günstig kann die Kohle auf dem Federbügel mittels Laserschweißen befestigt werden, oder alternativ mittels Nieten, Kleben oder Einpressen.

Die Hammerbürste kann sehr kostengünstig als Biege-Stanzteil gefertigt werden, wobei der Aufnahmebereich für die Kohle, der Federhebel, der Kontaktpin, sowie das Klemmelement mit der Rastverzahnung aus einem Stück gefertigt sind.

Das Bürstenträger-Bauteil kann vorteilhafter Weise als Systemträger verwendet werden, bei dem auch weitere Bauelemente, wie beispielsweise Entstördrosseln oder ein Massekontakt, als komplette Baugruppe vormontiert werden können. Dabei können alle Bauteile verfahrenstechnisch günstig in einem Arbeitsprozess elektrisch mit der Leiterplatte kontaktiert, beispielsweise mittels THRS-Verfahren gelötet werden.

In einer bevorzugten Ausführung ist das Bürstenträger-Bauteil als U-förmige Tasche für die beiden Hammerbürsten ausgebildet, sodass der Bürstenträger gleichzeitig ein Transportschutz für die Hammerbürsten darstellt. Dabei können die Hammerbürsten zustätzlich zur Bodenfläche und den beiden Schenkelflächen noch von zwei weiteren axialen Seitenflächen umschlossen sein.

Beim erfindungsgemäßen Elektromotor können die Hammerbürsten durch deren Positionierung auf dem Bürstenträger-Bauteil präziser justiert werden als bei der direkten Befestigung der Hammerbürsten auf der Leiterplatte. Das Bürstenträger-Bauteil kann wiederum sehr genau mittels Zentrierstiften gegenüber der Leiterplatte justiert werden. Dadurch entfällt der zusätzliche Justierprozess der Hammerbürsten. Durch die Anordnung der Hammerbürsten auf einem separaten Bürstenträger-Bauteil, das mit der Leiterplatte verbunden wird, werden die auf den Elektromotor einwirkenden Vibrationen nicht in vollem Umfang auf die Hammerbürsten übertragen. Außerdem kann die Leiterplatte zusammen mit dem Bürstenträger-Bauteil in einem Prozessschritt gegenüber dem Kommutator justiert werden.

Bei der Vormontage des Bürstenträger-Bauteils auf der Leiterplatte können die elektrischen Pins sehr einfach mittels eines automatisierten Lötverfahrens mit der Leiterplatte kontaktiert werden, da alle Kontaktpins der Hammerbürsten und der weiteren Bauelemente durch Durchbrüche der Bodenfläche des Bürstenträger-Bauteils hindurch in Bohrungen der Leiterplatte eingreifen.

Beim erfindungsgemäßen Herstellungsverfahren des Elektromotors können die Hammerbürsten montagetechnisch sehr einfach am Bürstenträger-Bauteil exakt und zuverlässig befestigt werden, ohne dass hierfür zusätzliche Verbindungsmittel oder Verbindungsprozesse notwendig sind. Die Hammerbürsten werden in einem Arbeitsschritt mit anderen Bauelementen elektrisch mit der Leiterplatte kontaktiert, wodurch sowohl die mechanische als auch die elektrische Anbindung der Hammerbürsten sehr kostengünstig erfolgen kann. Durch die elektrischen Verbindungen kann das Bürstenträger-Bauteil gleichzeitig mechanisch starr mit der Leiterplatte verbunden werden, ohne dass die gesamten Vibrationen von der Leiterplatte auf die Hammerbürsten übertragen werden.

Insbesondere kann am Bürstenträger-Bauteil ein Masse-Abschirmkontakt angeordnet und mit der Leiterplatte kontaktiert werden, wodurch eine gute elektromagnetische Abschirmung der Hammerbürsten realisiert werden kann.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen:
- Figur 1: ein Ausführungsbeispiel eines erfindungsgemäßen Elektromotors,
- Figur 2: eine vergrößerte Darstellung des Bürstenträger-Bauteils aus Figur 1,
- Figur 3: ein auf einer Leiterplatte vormontiertes Bürstenträger-Bauteil gemäß Figur 2, und
- Figur 4: eine weitere Ausführung des Bürstenträger-Bauteils.

### Beschreibung

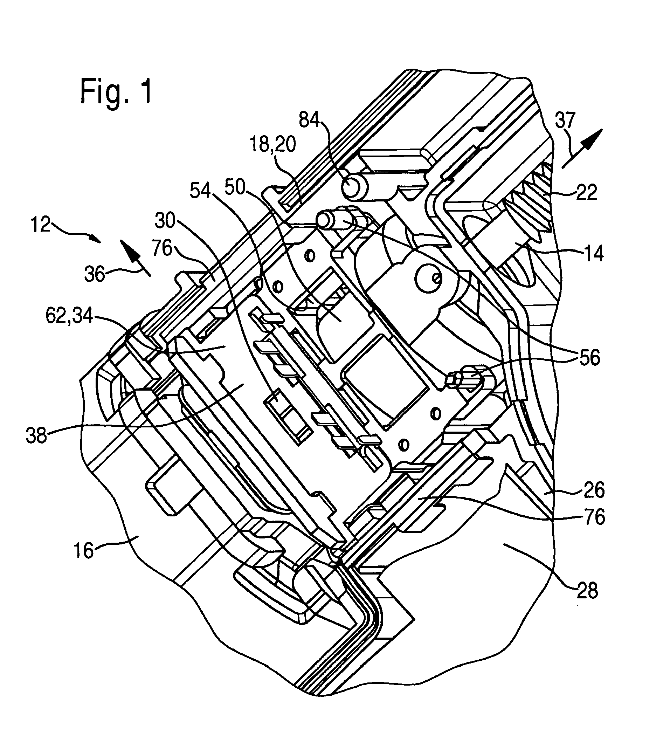

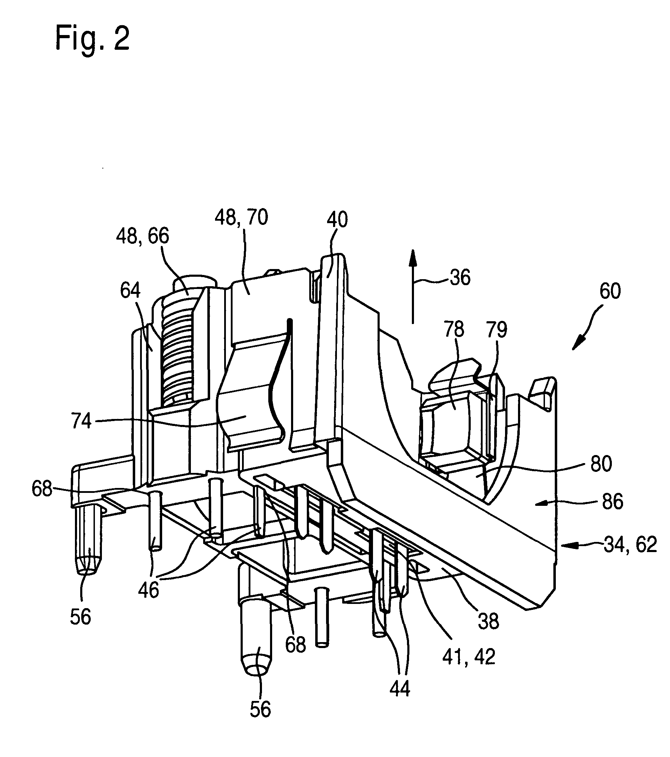

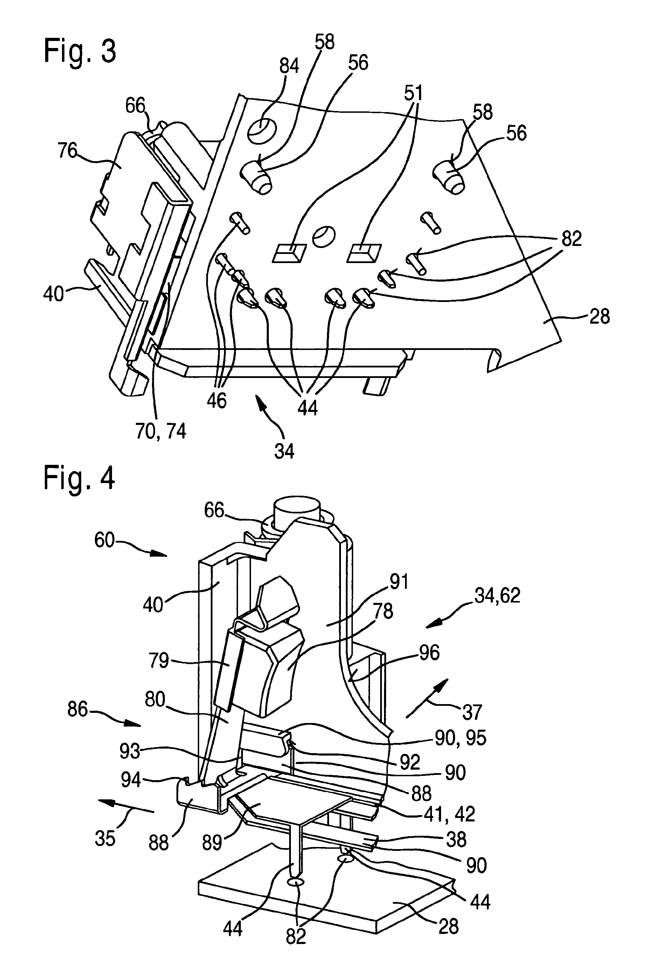

In Figur 1 ist ein Ausschnitt eines erfindungsgemäßen Elektromotors 12 dargestellt, bei dem sich eine Ankerwelle 14 aus einem Polgehäuse 16 heraus in ein Getriebegehäuse 18 hinein erstreckt. Das Getriebegehäuse 18 weist ein erstes schalenförmiges Gehäuseteil 20 auf, das nach der Montage des Elektromotors 12 und eines nicht näher dargestellten Getriebes 22 mit einem Gehäusedeckel verschlossen wird. Der Elektromotor 12 weist des Weiteren ein Elektronikgehäuse 26 auf, das beispielsweise einstückig mit der unteren Gehäuseschale 20 ausgebildet ist und eine Leiterplatte 28 aufnimmt. Auf der Ankerwelle 14 ist ein Kommutator 30 angeordnet, der über Hammerbürsten 32 mit Strom versorgt wird. Die Hammerbürsten 32 sind in ein separates Bürstenträger-Bauteil 34 eingeklemmt, das vergrößert in Figur 2 dargestellt ist. Das Bürstenträger-Bauteil 34 ist als U-förmiges Kunststoffteil ausgebildet und ist in radialer Richtung 36 zur Ankerwelle 14 montierbar. In einer Bodenfläche 38 des Bürstenträger-Bauteils 34, die zwischen zwei Schenkeln 40 angeordnet ist, ist als Durchbruch 41 ein Schlitz 42 ausgeformt, durch den Kontaktpins 44 der Hammerbürsten 32 hindurch greifen. Diese Kontaktpins 44 sind zusammen mit weiteren Pins 46 von Bauelementen 48, die ebenfalls auf dem Bürstenträger-Bauteil 34 angeordnet sind, elektrisch mit der Leiterplatte 28 verbunden (siehe Figur 3). In Figur 1 ist die Leiterplatte 28, die sich näherungsweise parallel zur Ankerwelle 14 und zum Gehäusedeckel erstreckt, abgeschnitten, um die Sicht auf das Bürstenträger-Bauteil 34 frei zu geben. Axial benachbart zum Kommutator 30 ist auf der Ankerwelle 14 ein Ringmagnet 50 angeordnet, der mit entsprechenden Hall-Sensoren 51 zusammen wirkt, die durch entsprechende Öffnungen 54 im Bürstenträger-Bauteil 34 hindurch greifen. Zur Justierung des Bürstenträger-Bauteils 34 gegenüber der Leiterplatte 28 sind an der Bodenfläche 38 Zentrierstifte 56 angeformt, die in entsprechende Zentrieröffnungen 58 der Leiterplatte 28 eingreifen. Das Bürstenträger-Bauteil 34 bildet hierbei einen U-förmigen Käfig 60, der die Hammerbürsten 32 gegenüber dem Getriebe 22 und dem Elektronikgehäuse 26 abtrennt, um beispielsweise deren Verschmutzung durch Kohlestaub zu verhindern.

In Figur 2 ist das Bürstenträger-Bauteil 34 als Systemträger 62 für eine vormontierte Baugruppe dargestellt, der zusätzlich zu den Hammerbürsten 32 weitere Bauelemente 48 aufnimmt. Hierzu weist das Bürstenträger-Bauteil 34 hülsenförmige Aufnahmen 64 auf, in der Entstördrosseln 66 angeordnet sind, die mit ihren Pins 46 durch entsprechende Löcher 68 in der Bodenfläche 38 hindurch greifen. Des Weiteren ist auf dem Bürstenträger-Bauteil 34 ein Masse-Kontaktblech 70 gelagert, das die Hammerbürsten 32 U-förmig umschließt, um die durch das Bürstenfeuer entstehende elektromagnetische Störstrahlung abzuschirmen. Das Masse-Kontaktblech 70 weist ebenfalls Pins 46 auf, die durch Löcher 68 in der Bodenfläche 38 hindurch greifen, um die elektrische Verbindung mit der Leiterplatte 28 herzustellen. Dabei sind die Löcher 68 und der Durchbruch 41 deckungsgleich angeordnet zu Bohrungen 82, die in der sich entlang der Bodenfläche 38 erstreckenden Leiterplatte 28 ausgeformt sind. Entlang den beiden Schenkeln 40 weist das Masse-Kontaktblech 70 zwei großflächige Federkontakte 74 auf, die nach der Montage im Getriebegehäuse 18 federnd an einem Abschirmblech 76 anliegen, das wiederum mit dem Polgehäuse 16 kontaktiert ist. Die Hammerbürsten 32 weisen Kohlen 78 auf, die an einem Ende eines Federhebels 80 befestigt sind. Beispielsweise werden die Kohlen 78 mittels Laserschweißen befestigt, oder in eine angeformte Kohlenaufnahme 79 des Federhebels 80 eingepresst. Am anderen Ende des Federhebels 80 sind die Kontaktpins 44 angeordnet; beispielsweise zwei Kontaktpins 44 an jeder Hammerbürste 32, die durch den Schlitz 42 in der Bodenfläche 38 greifen.

In Figur 3 ist das Bürstenträger-Bauteil 34 als vormontierter Systemträger 62 auf der Leiterplatte 28 angeordnet. Die Leiterplatte 28 weist eine Vielzahl von Bohrungen 82 auf, in die die Kontaktpins 44 der Hammerbürsten 32 und die Pins 46 der weiteren Bauelemente 48 eingreifen. Beispielsweise sind hier die vier Pins 46 der beiden Entstördrosseln 66 und zwei Pins 46 des Masse-Kontakblechs 70 dargestellt. Nachdem das Bürstenträger-Bauteil 34 mit seinen Zentrierstiften 56 formschlüssig in die entsprechenden Zentrieröffnungen 58 der Leiterplatte 28 eingefügt ist, werden die Pins 44 und 46 mittels dem sogenannten THRS-Verfahren mit der Leiterplatte 28 verlötet. Hierbei werden die Öffnungen 82 der Leiterplatte 28 mit Lötpaste gefüllt, die Bauelemente 48, 32 mit ihren Pins 46, 44 in die Öffnungen 82 eingeführt, und dann zum Aushärten der Lötpaste erwärmt - beispielsweise in einem Ofen. Ein solches automatisches Lötverfahren ist sehr kostengünstig und sehr flexibel bezüglich der Anordnung der Bauelemente 48 auf der Leiterplatte 28. Nachdem das Bürstenträger-Bauteil 34 somit mechanisch und elektrisch mit der Leiterplatte 28 starr verbunden ist, wird die Leiterplatte 28 mit dem Bürstenträger-Bauteil 34 radial zur im Getriebegehäuse 18 angeordneten Ankerwelle 14 montiert. Dabei wird die Leiterplatte 28 wiederum mittels Zentrierelementen 84 gegenüber dem Getriebegehäuse 18 justiert. Nach der Montage des vormontierten Systemträgers 62 in radialer Richtung 36 liegen die Federkontakte 74 des Masse-Kontakblechs 70 an dem zuvor im Getriebegehäuse 18 montierten Abschirmblech 76 an.

Figur 4 zeigt ein weiteres Ausführungsbeispiel eines erfindungsgemäßen Bürstenträger-Bauteils 34, aus der der Einklemmprozess der Hammerbürsten 32 in entsprechende Bürstenaufnahmen 86 ersichtlich wird. Der Federhebel 80 ist als Biege-Stanzteil einstückig mit den Kontaktpins 44 und Klemmelementen 88 ausgebildet, mit denen die Hammerbürsten 32 in den Bürstenaufnahmen 86 des Bürstenträger-Bauteils 34 fixiert sind. Der Federhebel 80 ist hierbei winkelig abgebogen, wobei seitlich in beiden axialen Richtungen 37 die Klemmelemente 88 angeordnet sind. Die Hammerbürste 32 wird zur Montage in das Bürstenträger-Bauteil 34 mit den Kontaktpins 44 in radialer Richtung 36 in den Schlitz 42 der Bodenfläche 38 eingefügt. Danach liegt der abgewinkelte Bereich 89 des Federhebels 80 an einer Führungsschiene 90 an, die durch die Bodenfläche 38 gebildet wird. Gleichzeitig wird die Hammerbürste 32 durch die Klemmelemente 88, die an axialen Seitenflächen 91 des Bürstenträger-Bauteils 34 anliegen, auch in axialer Richtung 37 geführt. An den Klemmelementen 88 ist eine Rastverzahnung 94 angeformt, die beim Verschieben der Hammerbürsten 32 entlang der Führungsschiene 90 mit einer Gegenfläche 92 der Bürstenaufnahme 86 verrasten. Die Hammerbürsten 32 werden jeweils in entgegen gesetzter tangentialer Richtung 35 soweit verschoben, bis sie an einem Anschlag 93 anliegen. Als Anschlag 93 dient beispielsweise der Schenkel 40 des U-förmigen Bürstenträger-Bauteils 34 oder ein an der Gegenfläche 92 quer zur Führungsschiene 90 sich erstreckende Anschlagsfläche. Die Gegenfläche 92, in der sich die Rastverzahnung 94 verhakt, ist beispielsweise als L-förmiges Profil 95 ausgebildet, das an den axialen Seitenflächen 91 angeformt ist und sich in tangentialer Richtung 35 erstreckt. Das L-förmige Profil dient ebenfalls als Führungsschiene 90 für das Einschieben der Hammerbürsten 32. Wird die Hammerbürste 32 entlang der Führungsschiene 90 der Bürstenaufnahme 86 bis zum Anschlag 93 in tangentialer Richtung 35 eingeschoben, bleibt die Hammerbürste 32 in dieser Position zuverlässig fixiert, da die Rastverzahnung 94 formschlüssig in die Gegenfläche 52 aus Kunststoff eingreift. Die Hammerbürsten 32 werden nach der Montage im Bürstenträger-Bauteil 34 von dessen Schenkeln 40 und der Bodenfläche 38 U-förmig von drei Seiten umschlossen. Zusätzlich bilden die axialen Seitenflächen 91, die eine U-förmige Aussparung 96 für die Ankerwelle 14 aufweisen, einen Teil des die Hammerbürsten 32 umschließenden Käfigs 60. In radialer Montagerichtung 36 ist das Bürstenträger-Bauteil 34 komplett offen ausgebildet, damit die Hammerbürsten 32 über den Kommutator 30 aufgeschoben werden können. Nachdem die Hammerbürsten 32 im Bürstenträger-Bauteil 34 als Systemträger 62 einer separaten Baugruppe vormontiert sind, wird diese elektrisch und mechanisch nach dem bzgl. Figur 3 beschriebenen Verfahren mit der Leiterplatte 28 verbunden.

In einer alternativen, nicht näher dargestellten Ausführung können die Hammerbürsten 32 mit ihren Klemmelementen 88 auch in Montagerichtung 36 in eine entsprechend ausgeformte Bürstenaufnahme 86 eingeführt werden. Dabei ist die Führungsschiene 90 in Montagerichtung 36 ausgerichtet, wobei die Hammerbürsten 32 bezüglich der Montagerichtung 36 verrasten. Alternativ zur selbsttätigen Verrastung mittels einer Rastverzahnung 94 können die Hammerbürsten 32 auch mittels eines zusätzlichen Verfahrensschritts kraft- oder formschlüssig in der Bürstenaufnahme 86 fixiert werden.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise die konkrete Ausgestaltung des Federhebels 80, der Klemmelemente 88, sowie der korrespondierenden Bürstenaufnahme 86 mit der Führungsschiene 90 entsprechend variiert werden. Ebenfalls können die Verbindungsmittel zwischen dem Bürstenträger-Bauteil 34, beziehungsweise den Kontaktpins 44 und Pins 46 und der Leiterplatte 28 entsprechend angepasst werden. Das Bürstenträger-Bauteil 34 ist vorzugsweise als Systemträger 62 für eine vormontierte Baugruppe ausgebildet, die vor dessen radialer Montage in das Gehäuseteil 20 mechanisch fest mit der Leiterplatte 28 verbunden wird. Der erfindungsgemäße Elektromotor 12 wird insbesondere für Fensterheber, Schiebedächer oder für andere Komfortfunktionen im Kraftfahrzeug verwendet.

## Patentansprüche

1. Bürstenträger-Bauteil (34) zur Positionierung von Kohlebürsten gegenüber einem Kommutator (30) eines Elektromotors (12), mit mindestens einem Zentrierelement (56) zur Fixierung des Bürstenträger-Bauteils (34) auf einer Leiterplatte (28), wobei das Bürstenträger-Bauteil (34) eine Bürstenaufnahme (86) aufweist, in die Hammerbürsten (32) direkt - ohne Verwendung weiterer Verbindungselemente - eingeklemmt sind, **dadurch gekennzeichnet, dass** die Bürstenaufnahme (86) eine Führungsschiene (90) aufweist, in der die Hammerbürsten (32) mit einem Klemmelement (88) in tangentialer Richtung (35) zum Kommutator (30) einführbar sind, wobei entlang der Führungsschiene (90) ein Schlitz (42) im Bürstenträger-Bauteil (34) ausgeformt ist, in dem mindestens ein an der Hammerbürste (32) angeordneten Kontaktpin (44) beim Einschieben der Hammerbürste (32) eingreift, **wobei das Zentrierelement (56) an einer Bodenfläche (38) des Bürstenträgerbauteils (34) angeformt ist, um in entsprechende Zentrieröffnungen (58) der Leiterplatte (28) einzugreifen.**

2. Bürstenträger-Bauteil (34) nach Anspruch 1, **dadurch gekennzeichnet, dass** die Hammerbürste (32) eine Kohle (78) aufweist, die an einem Federhebel (80) befestigt ist, und am Federhebel (80) das Klemmelement (88) ausgebildet ist, das in die Bürstenaufnahme (86) des Bürstenträger-Bauteils (34) einschiebbar ist.

3. Bürstenträger-Bauteil (34) nach einem der Ansprüche 1 oder 2, **dadurch gekennzeichnet, dass** das Klemmelement (88) eine Rastverzahnung (94) aufweist, die mit einer Gegenfläche (92) der Bürstenaufnahme (86) zusammenwirkt.

4. Bürstenträger-Bauteil (34) nach einem der vorhergehenden Ansprüche,
**dadurch gekennzeichnet, dass** quer zur Führungsschiene (90) eine Anschlagsfläche (93) angeordnet ist, an dem das Klemmelement (88) nach dem Einschieben anliegt, um die Hammerbürste (32) definiert im Bürstenträger-Bauteil (34) zu positionieren.

5. Bürstenträger-Bauteil (34) nach einem der Ansprüche 3 bis 4, **dadurch gekennzeichnet**, die Gegenfläche (92), in der sich die Rastverzahnung (94) verhakt, als L-förmiges Profil (95) ausgebildet, das an den axialen Seitenflächen (91) des Bürstenträger-Bauteils (34) angeformt ist und sich in tangentialer Richtung (35) erstreckt.

6. Bürstenträger-Bauteil (34) nach einem der vorhergehenden Ansprüche, **dadurch gekennzeichnet, dass** die Kohle (78) mittels Nieten oder Schweißen oder Kleben oder Einpressen mit dem Federhebel (80) verbunden ist

7. Bürstenträger-Bauteil (34) nach einem der vorhergehenden Ansprüche, **dadurch gekennzeichnet, dass** der Federhebel (80) zusammen mit dem Klemmelement (88) und dem Kontaktpin (44) einstückig als metallisches Biege-Stanzteil ausgebildet ist

8. Bürstenträger-Bauteil (34) nach einem der vorhergehenden Ansprüche, **gekennzeichnet, durch** die Aufnahme weiterer Bauelemente (48), wie Entstördrosseln (66) und/oder einem Masse-Kontaktblech (70).

9. Bürstenträger-Bauteil (34) nach einem der vorhergehenden Ansprüche, **gekennzeichnet, durch** die Ausbildung eines U-förmigen Käfigs (60) mit einer Bodenfläche (38) und zwei Schenkeln (40), die die Hammerbürsten (32) von mindestens drei Seiten umschließen.

10. Elektromotor (12) mit einem Bürstenträger-Bauteil (34) nach einem der vorhergehenden Ansprüche, **dadurch gekennzeichnet, dass** eine Leiterplatte (28) entlang der Bodenfläche (38) und tangential zum Kommutator (30) angeordnet ist und diesen in tangentialer Richtung (35) vollständig überdeckt, und das Bürstenhalter-Bauteil (34) mit den daran angeordneten Hammerbürsten (32) elektrisch und mechanisch starr mit der Leiterplatte (28) verbunden ist

11. Elektromotor (12) nach einem der vorhergehenden Ansprüche, **dadurch gekennzeichnet, dass** die Kontaktpins (44) der Hammerbürsten (32) - und insbesondere Pins (46) von weiteren Bauteilen (48) - durch die Durchbrüche (41) und Löcher (68) der Bodenfläche (38) des Bürstenträger-Bauteils (34) in entsprechende Bohrungen (82) in der Leiterplatte (28) greifen, um diese elektrisch zu kontaktieren.

12. Verfahren zum Herstellen eines Elektromotors (12) nach einem der Ansprüche 10 oder 11, bei dem eine Ankerwelle (14) mit einem Kommutator (30) von einem Gehäuseteil (18, 20) aufgenommen wird, **gekennzeichnet durch** folgende Montageschritte:
- die Ankerwelle (14) mit dem darauf gelagerten Kommutator (30) wird in das Gehäuseteil (20) eingesetzt
- Hammerbürsten (32) werden in Bürstenaufnahmen (86) eines Bürstenträger-Bauteils (34) eingesteckt, wobei die Bürstenaufnahme (86) eine Führungsschiene (90) aufweist, in der die Hammerbürsten (32) mit einem Klemmelement (88) in tangentialer Richtung (35) zum Kommutator (30) eingeführt werden, wobei entlang der Führungsschiene (90) ein Schlitz (42) im Bürstenträger-Bauteil (34) ausgeformt ist, in dem mindestens ein an der Hammerbürste (32) angeordneten Kontaktpin (44) beim Einschieben der Hammerbürste (32) eingreift
- die Hammerbürsten (32) werden elektrisch mit der Leiterplatte (28) verbunden, wobei das Bürstenträger-Bauteil (34) mechanisch mit der Leiterplatte (28) verbunden wird
- die Leiterplatte (28) mit dem Bürstenträger-Bauteil (34) wird in radialer Richtung (36) in das Gehäuseteil (20) montiert, wobei die Hammerbürsten (32) federnd am Kommutator (30) zum Anliegen kommen, **wobei das an einer Bodenfläche (38) des Bürstenträgerbauteils (34) angeformte Zentrierelement (56) in entsprechende Zentrieröffnungen der Leiterplatte (28) eingreift**
- ein Gehäusedeckel wird radial auf das Gehäuseteil (20) gefügt.

13. Verfahren nach Anspruch 12, **dadurch gekennzeichnet, dass** Kontaktpins (44) der Hammerbürsten (32) vor der Montage der Leiterplatte (28) mit dieser verlötet werden - insbesondere in einem Arbeitsgang mit dem Anlöten von im Bürstenträger-Bauteil (34) angeordneten Drosseln (66) und/oder eines Masse-Kontaktblechs (70).

## Claims

1. Brush mount component (34) for positioning carbon brushes in relation to a commutator (30) of an electric motor (12), having at least one centring element (56) for fixing the brush mount component (34) on a printed circuit board (28), wherein the brush mount component (34) has a brush holder (86) into which hammer-type brushes (32) are directly - without the use of further connecting elements - clamped, **characterized in that** the brush holder (86) has a guide rail (90) into which the hammer-type brushes (32) can be inserted by way of a clamping element (88) in the tangential direction (35) in relation to the commutator (30), wherein a slot (42) is formed in the brush mount component (34) along the guide rail (90), at least one contact pin (44) which is arranged on the hammer-type brush (32) engaging in the said slot when the hammer-type brush (32) is inserted, wherein the centring element (56) is integrally formed on a base surface (38) of the brush mount component (34) in order to engage in corresponding centring openings (58) in the printed circuit board (28).

2. Brush mount component (34) according to Claim 1, **characterized in that** the hammer-type brush (32) has a carbon element (78) which is attached to a spring lever (80), and the clamping element (88) is formed on the spring lever (80) and can be inserted into the brush holder (86) of the brush mount component (34).

3. Brush mount component (34) according to either of Claims 1 and 2, **characterized in that** the clamping element (88) has a latching tooth system (94) which interacts with a mating face (92) of the brush holder (86).

4. Brush mount component (34) according to one of the preceding claims, **characterized in that** a stop face (93) is arranged transverse to the guide rail (90) and, after being inserted, the clamping element (88) comes to rest against the said stop face in order to position the hammer-type brush (32) in the brush mount component (34) in a defined manner.

5. Brush mount component (34) according to either of Claims 3 and 4, **characterized in that** the mating face (92), in which the latching tooth system (94) interlocks, is in the form of an L-shaped profile (95) which is integrally formed on the axial side faces (91) of the brush mount component (34) and extends in the tangential direction (35).

6. Brush mount component (34) according to one of the preceding claims, **characterized in that** the carbon element (78) is connected to the spring lever (80) by means of riveting or welding or adhesive-bonding or pressing-in.

7. Brush mount component (34) according to one of the preceding claims, **characterized in that** the spring lever (80) is integrally formed as a metal bent-and-stamped part together with the clamping element (88) and the contact pin (44).

8. Brush mount component (34) according to one of the preceding claims, **characterized by** further elements (48), such as interference-suppression chokes (66) and/or an earth contact plate (70), being held.

9. Brush mount component (34) according to one of the preceding claims, **characterized by** the formation of a U-shaped cage (60) with a base surface (38) and two limbs (40) which surround the hammer-type brushes (32) on at least three sides.

10. Electric motor (12) having a brush mount component (34) according to one of the preceding claims, **characterized in that** a printed circuit board (28) is arranged along the base surface (38) and tangentially in relation to the commutator (30) and completely covers the said commutator in the tangential direction (35), and the brush mount component (34) is connected to the printed circuit board (28) in an electrical and mechanically fixed manner by way of the hammer-type brushes (32) which are arranged on the said brush mount component.

11. Electric motor (12) according to one of the preceding claims, **characterized in that** the contact pins (44) of the hammer-type brushes (32) - and, in particular, pins (46) of further components (48) - pass through the apertures (41) and holes (68) in the base surface (38) of the brush mount component (34) into corresponding bores (82) in the printed circuit board (28) in order to make electrical contact with the said printed circuit board.

12. Method for producing an electric motor (12) according to either of Claims 10 and 11 in which an armature shaft (14) having a commutator (30) is held by a housing part (18, 20), **characterized by** the following assembly steps:
- the armature shaft (14) with the commutator (30) mounted on it is inserted into the housing part (20),
- hammer-type brushes (32) are inserted into brush holders (86) of a brush mount component (34), wherein the brush holder (86) has a guide rail (90) into which the hammer-type brushes (32) are inserted by way of a clamping element (88) in the tangential direction (35) in relation to the commutator (30), wherein a slot (42) is formed in the brush mount component (34) along the guide rail (90), at least one contact pin (44) which is arranged on the hammer-type brush (32) engaging in the said slot when the hammer-type brush (32) is inserted,
- the hammer-type brushes (32) are electrically connected to the printed circuit board (28), wherein the brush mount component (34) is mechanically connected to the printed circuit board (28),
- the printed circuit board (28) with the brush mount component (34) is fitted in the housing part (20) in the radial direction (36), wherein the hammer-type brushes (32) come to rest against the commutator (30) in a sprung manner, wherein the centring element (56) which is integrally formed on a base surface (38) of the brush mount component (34) engages in corresponding centring openings in the printed circuit board (28),
- a housing cover is radially joined to the housing part (20).

13. Method according to Claim 12, **characterized in that** contact pins (44) of the hammer-type brushes (32) are soldered to the printed circuit board (28) before the said printed circuit board is fitted - in particular in one operation with soldering of chokes (66) which are arranged in the brush mount component (34) and/or of an earth contact plate (70).

## Revendications

1. Composant (34) porte-balai destiné à positionner des balais de graphite par rapport à un commutateur (30) d'un moteur électrique (12) et présentant au moins un élément de centrage (56) qui fixe le composant (34) porte-balai sur une carte de circuit (28),
le composant (34) porte-balai présentant un logement (86) pour balai dans lequel des balais (32) en marteau sont serrés directement à leurs éléments de liaison sans recours à d'autres éléments de liaison, **caractérisé en ce que**
le logement (86) de balai présente un rail de guidage (90) dans lequel les balais (32) en marteau dotés d'un élément de serrage (88) peuvent être insérés dans la direction (35) tangentielle par rapport au commutateur (30),
**en ce qu'**une fente (42) dans laquelle au moins un goujon de contact (44) disposé sur le balai (32) en marteau s'engage lors de l'insertion du balai (32) en marteau est formée le long du rail de guidage (90) dans le composant (34) porte-balai et
**en ce que** l'élément de centrage (56) est formé sur la surface de fond (38) du composant (34) porte-balai pour s'engager dans des ouvertures correspondantes de centrage (58) de la carte de circuit (28).

2. Composant (34) porte-balai selon la revendication 1, **caractérisé en ce que** les balais (32) en marteau présentent un graphite (78) fixé sur un levier élastique (80) et **en ce que** l'élément de serrage (88) qui peut être inséré dans le logement (86) de balai du composant (34) porte-balai est formé sur le levier élastique (80).

3. Composant (34) porte-balai selon l'une des revendications 1 ou 2, **caractérisé en ce que** l'élément de serrage (88) présente une denture d'encliquetage (94) qui coopère avec une surface complémentaire (92) du logement (86) de balai.

4. Composant (34) porte-balai selon l'une des revendications précédentes, **caractérisé en ce qu'**une surface de butée (93) sur laquelle l'élément de serrage (88) repose après avoir été inséré est disposée transversalement par rapport au rail de guidage (90) pour positionner le balai (32) en marteau de manière définie dans le composant (34) porte-balai.

5. Composant (34) porte-balai selon l'une des revendications 3 à 4, **caractérisé en ce que** la surface complémentaire (92) dans laquelle la denture d'encliquetage (94) s'accroche est configurée comme profilé (95) en forme de L formé sur la surface latérale axiale (91) du composant (34) porte-balai et s'étendant dans la direction tangentielle (35).

6. Composant (34) porte-balai selon l'une des revendications précédentes, **caractérisé en ce que** le graphite (78) est relié au levier élastique (80) par rivetage, soudage, collage ou sertissage.

7. Composant (34) porte-balai selon l'une des revendications précédentes, **caractérisé en ce que** le levier élastique (80) est configuré sous la forme d'une pièce flexible estampée, d'un seul tenant avec l'élément de serrage (88) et le goujon de contact (44).

8. Composant (34) porte-balai selon l'une des revendications précédentes, **caractérisé par** le logement d'autres composants (48), par exemple des bobines de déparasitage (66) et/ou une tôle (70) de contact de masse.

9. Composant (34) porte-balai selon l'une des revendications précédentes, **caractérisé par** la formation d'une cage (60) en forme de U dotée d'une surface de fond (38) et de deux ailes (40) qui entourent les balais (32) en marteau sur au moins trois côtés.

10. Moteur électrique (12) présentant un composant (34) porte-balai selon l'une des revendications précédentes,
**caractérisé en ce que**
une carte de circuit (28) est disposée le long de la surface de fond (38) et tangentiellement par rapport au commutateur (30) et recouvre ce dernier complètement dans la direction tangentielle (35) et
**en ce que** le composant (34) porte-balai sur lequel sont disposés des balais (32) en marteau est relié électriquement et mécaniquement de manière rigide à la carte de circuit (28).

11. Moteur électrique (12) présentant un composant (34) porte-balai selon l'une des revendications précédentes, **caractérisé en ce que** les goujons de contact (44) des balais (32) en marteau et en particulier les goujons (46) d'autres composants (48) s'engagent par des perforations (41) et des trous (68) de la surface de fond (38) du composant (34) porte-balai dans des alésages (82) correspondants ménagés dans la carte de circuit (28), pour assurer leur contact électrique.

12. Procédé de fabrication d'un moteur électrique (12) selon l'une des revendications 10 ou 11, dans lequel un arbre d'induit (14) doté d'un commutateur (30) est logé dans une pièce de boîtier (18, 20), le procédé étant **caractérisé par** les étapes de montage suivantes :
l'arbre d'induit (14) sur lequel est monté le commutateur (30) est inséré dans la pièce de boîtier (20),
des balais (32) en marteau sont insérés dans les logements (86) de balai d'un composant (34) porte-balai, le logement (86) de balai présentant un rail de guidage (90) dans lequel les balais (32) en marteau dotés d'un élément de serrage (88) sont insérés dans la direction (35) tangentielle par rapport au commutateur (30),
une fente (42) dans laquelle au moins un goujon de contact (44) disposé sur le balai (32) en marteau s'engage lors de l'insertion du balai (32) en marteau est formée le long du rail de guidage (90) dans le composant (34) porte-balai,
les balais (32) en marteau sont raccordés électriquement à la carte de circuit (28), le composant (34) porte-balai étant raccordé mécaniquement à la carte de circuit (28),
la carte de circuit (28) présentant le composant (34) porte-balai est montée dans la pièce de boîtier (20) dans la direction radiale (36), les balais (32) en marteau venant se placer élastiquement contre le commutateur (30), l'élément de centrage (56) formé sur une surface de fond (38) du composant (34) porte-balai s'engageant dans des ouvertures correspondantes de centrage de la carte de circuit (28) et
un couvercle de boîtier est joint radialement à la pièce de boîtier (20).

13. Procédé selon la revendication 12, **caractérisé en ce que** des goujons de contact (44) des balais (32) en marteau sont soudés sur la carte de circuit (28) avant le montage, en particulier dans une étape de travail qui comprend le brasage de bobines (66) disposées dans le composant (34) porte-balai et/ou d'une tôle (70) de contact de masse.
